# EUROPÄISCHE PATENTSCHRIFT

(11) **EP 1 896 299 B1**
(45) Veröffentlichungstag und Bekanntmachung des Hinweises auf die Patenterteilung: **27.05.2009**
(21) Anmeldenummer: 06791407.7
(22) Anmeldetag: 25.09.2006
(51) Int. Cl.: B60R 21/233

(54) **GASSACKANORDNUNG FÜR EIN AIRBAGMODUL EINES KRAFTFAHRZEUGS**
AIRBAG ARRANGEMENT FOR AN AIRBAG MODULE OF A MOTOR VEHICLE
ENSEMBLE COUSSIN GONFLABLE POUR UN MODULE D'AIRBAG D'UN VEHICULE AUTOMOBILE

(30) Priorität: 07.10.2005 DE 102005049209
(43) Veröffentlichungstag der Anmeldung: 12.03.2008
(73) Patentinhaber: Takata-Petri AG, 63743 Aschaffenburg (DE)
(72) Erfinder: KALLISKE, Ingo, 14476 Potsdam (DE); WENDT, Mario, 14532 Stahnsdorf (DE)
(74) Vertreter: Baumgärtel, Gunnar
(86) Internationale Anmeldenummer: PCT/DE2006/001706
(87) Internationale Veröffentlichungsnummer: WO 2007/041985

(56) Entgegenhaltungen:
- EP-A- 1 452 403
- EP-A2- 1 498 320
- WO-A-01/62556
- DE-A1- 19 860 827
- GB-A- 2 289 653

## Beschreibung

Die Erfindung betrifft eine Gassackanordnung für ein Airbagmodul eines Kraftfahrzeugs, die in einem Crash-Fall zum Schutz einer Person durch Befüllen mit Gas aufblasbar ist, nach dem Oberbegriff des Patentanspruchs 1.

Eine derartige Gassackanordnung umfasst mindestens eine von einer inneren Hülle der Gassackanordnung umschlossene innere Kammer, die im aufgeblasenen Zustand einen zentralen Bereich der Gassackanordnung bildet, sowie eine Mehrzahl äußerer Kammern, die außerhalb der von der inneren Hülle umschlossenen inneren Kammer derart angeordnet sind, dass sie (in ihrer Gesamtheit betrachtet) die innere Kammer zumindest teilweise umgeben.

Eine solche Gassackanordnung ist beispielsweise aus der DE 21 05 428 A1 bekannt. Hierbei bilden einzelne Abschnitte der die innere Kammer umgrenzenden inneren Hülle zugleich auch einen Bestandteil der die äußeren Kammern umgebenden äußeren Hüllen. Dies ermöglicht eine unmittelbare Abstützung der äußeren Kammern an der inneren Kammer zur Stabilisierung der Gassackanordnung.

Der Erfindung liegt das Problem zugrunde, eine Gassackanordnung der eingangs genannten Art weiter zu verbessern.

Dieses Problem wird erfindungsgemäß durch die Schaffung einer Gassackanordnung mit den Merkmalen des Patentanspruchs 1 gelöst.

Danach ist zumindest ein Teil (eine Mehrzahl) der äußeren Kammern jeweils von einer zugeordneten äußeren Hülle umschlossen, die einen der inneren Hülle gegenüber liegenden Hüllenabschnitt aufweist, welcher unabhängig von der inneren Hülle ist und nicht zur Begrenzung der (von der inneren Hülle umschlossenen) inneren Kammer der Gassackanordnung dient; und es sind die der inneren Hülle gegenüber liegenden Hüllenabschnitte der äußeren Kammern zumindest teilweise derart von der inneren Hülle beabstandet, dass zwischen der inneren Hülle und den gegenüber liegenden Hüllenabschnitten der äußeren Kammern mindestens ein beim Aufblasen des Gassackes nicht mit Gas befüllbarer Freiraum gebildet wird. Zum Befüllen der äußeren Kammern mit Gas stehen diese jeweils mit der inneren Kammer in Strömungsverbindung, so dass durch Befüllen der inneren Kammer mit Gas (anschließend) auch die äußeren Kammern mit Gas befüllt und dadurch aufgeblasen werden. Die einzelnen äußeren Hüllen sind jeweils zumindest teilweise um die innere Hülle herumgelegt. Die äußeren Kammern sind entlang der Erstreckungsrichtung der inneren Kammer nebeneinander angeordnet und gehen jeweils im Wesentlichen quer zur Erstreckungsrichtung der inneren Kammer von der inneren Kammer ab.

Die Angabe, dass die Hüllenabschnitte der äußeren Kammern zumindest teilweise von der inneren Hülle beabstandet sind, beinhaltet, dass Teilbereiche jener Hüllenabschnitte durchaus an der inneren Hülle anliegen können, um die Gesamtanordnung zu stabilisieren. Von Bedeutung ist jedoch, dass zumindest substantielle Teilbereiche jener Hüllenabschnitte von der inneren Hülle beabstandet sind, so dass zwischen der inneren Hülle und der Mehrzahl äußerer Hüllen ein oder mehrere nicht mit Gas befüllbare Freiräume substantieller Größe gebildet werden.

Die erfindungsgemäße Gassackanordnung hat den Vorteil, dass sie im aufgeblasenen Zustand für einen optimalen Schutz eines Fahrzeuginsassen ein deutlich reduziertes Gasvolumen benötigt, so dass entsprechend kleinere und leichtere Gasgeneratoren zum Aufblasen der Gassackanordnung verwendet werden können, da die zwischen den äußeren Kammern und der mindestens einen inneren Kammer gebildeten Freiräume nicht mit Gas befüllt werden müssen - ohne dass hierdurch die Schutzwirkung der Gassackanordnung beeinträchtigt würde; denn bei einem Aufprall einer in einem Crash-Fall zu schützenden Person auf die äußeren Kammern der Gassackanordnung können sich diese an der inneren Kammer abstützen. Die Steifigkeit der Gassackanordnung und damit die Größe der Stützkraft wird von verschiedenen Faktoren beeinflusst, wie z.B. dem Innendruck der Kammern, der Art der Verbindung der äußeren Kammern untereinander und der Dimensionierung der Kammern (äußere und innere) insgesamt. Vorzugsweise ist vorgesehen, dass sich die äußeren Kammern im aufgeblasenen Zustand der Gassackanordnung schon ohne Wirkung äußerer Kräfte mit einem Teilbereich ihres jeweiligen der inneren Kammer gegenüber liegenden Hüllenabschnittes an der inneren Hülle abstützen, um die Stabilität der Gassackanordnung zu erhöhen.

Gemäß einer Ausführungsform der Erfindung ist zwischen der inneren Hülle und den äußeren Hüllen der Gassackanordnung eine Mehrzahl Freiräume gebildet, die durch die der inneren Kammer gegenüber liegenden Hüllenabschnitte der äußeren Kammern voneinander getrennt sind, zum Beispiel dadurch, dass die Hüllenabschnitte der äußeren Kammern in Richtung auf die innere Hütte gewölbt sind und sich mit ihrem am weitesten vorgewölbten Teilbereich jeweils an der inneren Hülle abstützen. Die nicht mit Gas befüllbaren Freiräume werden dabei zumindest teilweise durch die innere Hülle und mindestens eine äußere Hülle, insbesondere durch die äußeren Hüllen zweier benachbarter äußerer Kammern, begrenzt.

Die äußeren Hüllen sind bevorzugt zumindest teilweise untereinander verbunden, und zwar insbesondere in der Art, dass jeweils die äußeren Hüllen benachbarter äußerer Kammern miteinander verbunden sind.

Gemäß einer bevorzugten Ausführungsform der Erfindung sind die Verbindungsbereiche, über die die äußeren Hüllen miteinander verbunden sind, nicht gasleitend, so dass die Verbindungsbereiche ausschließlich zur mechanischen Stabilisierung der Gassackanordnung, nicht aber zur Gasverteilung innerhalb der Gassackanordnung dienen. Dabei kann der jeweilige Verbindungsbereich ein Bestandteil einer Gassacklage bzw. mehrerer Gassacklagen sein, die zur Bildung der äußeren Hütten dienen. Hierbei sind die entsprechenden Gassacklagen bevorzugt derart miteinander verbunden, dass durch die Verbindungsbereiche hindurch kein Gasfluss von einer äußeren Kammer in eine andere äußere Kammer erfolgen kann.

Die Verbindungsbereiche sind vorteilhaft derart ausgebildet und angeordnet, dass diese beim Aufblasen der Gassackanordnung gestrafft werden; und sie weisen weiterhin jeweils eine der inneren Hülle gegenüber liegende Oberfläche auf, die von der inneren Hülle beabstandet ist. Hierdurch tragen jene Verbindungsbereiche zur Begrenzung der nicht mit Gas befüllbaren Freiräume zwischen den äußeren Kammern und der inneren Kammer bei. Durch die Straffung der Verbindungsbereiche beim Aufblasen der Gassackanordnung werden die durch die Verbindungsbereiche verbundenen äußeren Kammern definiert positioniert und für einen Aufprall durch einen zu schützenden Fahrzeuginsassen bereit gehalten.

Gemäß einer Ausführungsform der Erfindung sind die einzelnen äußeren Kammern zum Beispiel unter einem Winkel von mindestens 120° bzw. besonders vorteilhaft unter einem Winkel von mindestens 180° oder sogar vollständig unter einem Winkel von 360° um die innere Kammer herumgelegt.

Konkret kann weiterhin vorgesehen sein, dass die innere Kammer längserstreckt ausgebildet ist und die äußeren Kammern mit der inneren Kammer in Strömungsverbindung stehen. Die innere Kammer kann hierbei einerseits im Wesentlichen durchgängig geradlinig erstreckt sein oder mindestens einfach abgewinkelt sein.

Eine Gässackanordnung der vorstehend beschriebenen Art eignet sich insbesondere, aber nicht ausschließlich, zur Anordnung an der Außenseite eines Kraftfahrzeugs, um in einem Crash-Fall eine auf die Außenseite des Kraftfahrzeugs prallende Person, zum Beispiel einen Fußgänger oder einen Radfahrer, zu schützen. Eine durchgängig im Wesentlichen geradlinig erstreckte Gassackanordnung kann hier beispielsweise im Übergangsbereich zwischen dem unteren Ende der Windschutzscheibe und der Motorklappe verlaufen; sie kann dabei auch zu einem Anstellen des hinteren, windschutzscheibenseitigen Endes der Motorhaube in einem Crash-Fall dienen, um den Aufprall einer Person auf die Motorhaube zu dämpfen.

Weist die Gassackanordnung andererseits einen im Wesentlichen längserstreckten Bereich sowie zwei von den beiden Stirnseiten des längserstreckten Bereiches abgehende, abgewinkelte Bereiche auf, so können die abgewinkelten Bereiche sich beispielsweise entlang jeweils einer A-Säule eines Kraftfahrzeugs erstrecken und hierdurch eine Person beim Aufprall im Bereich der A-Säule schützen.

Gemäß einer vorteilhaften Weiterbildung der Erfindung sind die mindestens eine innere Kammer sowie die äußeren Kammern der Gassackanordnung von einer flexiblen Umhüllung umgeben, die bevorzugt an nach außen gewölbten Hüllenabschnitten der äußeren Kammern anliegt und mit diesen verbunden ist. Durch die Umhüllung der mindestens eine innere Kammer sowie eine Mehrzahl äußerer Kammern umfassenden, strukturierten Gassackanordnung werden auf der Außenseite der Gassackanordnung bestehende Zwischenräume zwischen den äußeren Kammern überdeckt, so dass zwischen jener flexiblen Umhüllung und den äußeren Kammern der Gassackanordnung sowie deren Verbindungsbereichen zusätzlichg, nicht mit Gas befüllbare Freiräume entstehen Durch die flexible Umhüllung wird die Eindringtiefe eines zu schützenden Körperteiles einer Person in die Gassackanordnung, insbesondere am Beginn der Einwirkung der Gassackanordnung auf ein zu schützendes Körperteil, weiter reduziert und dadurch die Schutzwirkung, insbesondere die Rückhalteeigenschaften, der Gassackanordnung noch verbessert.

Weitere Einzelheiten und Vorteile der Erfindung, insbesondere mehrere konkrete Ausführungsformen der erfindungsgemäßen Gassackanordnung, sind in zusätzlichen abhängigen Patentansprüchen sowie in der nachfolgenden Beschreibung anhand der Figuren angegeben.

Es zeigen:
- Fig. 1a: eine Draufsicht auf eine flach ausgebreitete Gassackanordnung mit einer Mehrzahl Kammern;
- Fig. 1b: die Gassackanordnung aus Figur 1a in ihrem Betriebszustand vor dem Aufblasen der Gassackanordnung;
- Fig. 2a: einen Querschnitt durch die Gassackanordnung aus Figur 1b im aufgeblasenen Zustand;
- Fig. 2b: einen Längsschnitt durch die Gassackanordnung aus Figur 1b im aufgeblasenen Zustand;
- Fig. 3: eine Abwandlung des Querschnittes aus Figur 2a;
- Fig. 4: eine Weiterbildung der Gassackanordnung aus Figur 1a mit einem abgewinkelten Gassackabschnitt;
- Fig. 5: eine erste Abwandlung der Anordnung aus Figur 4;
- Fig. 6: eine zweite Abwandlung der Anordnung aus Figur 4;
- Fig. 7: einen Längsschnitt durch eine Gassackanordnung, entsprechend Figur 2b, die zusätzlich von einer flexiblen Umhüllung umhüllt ist.

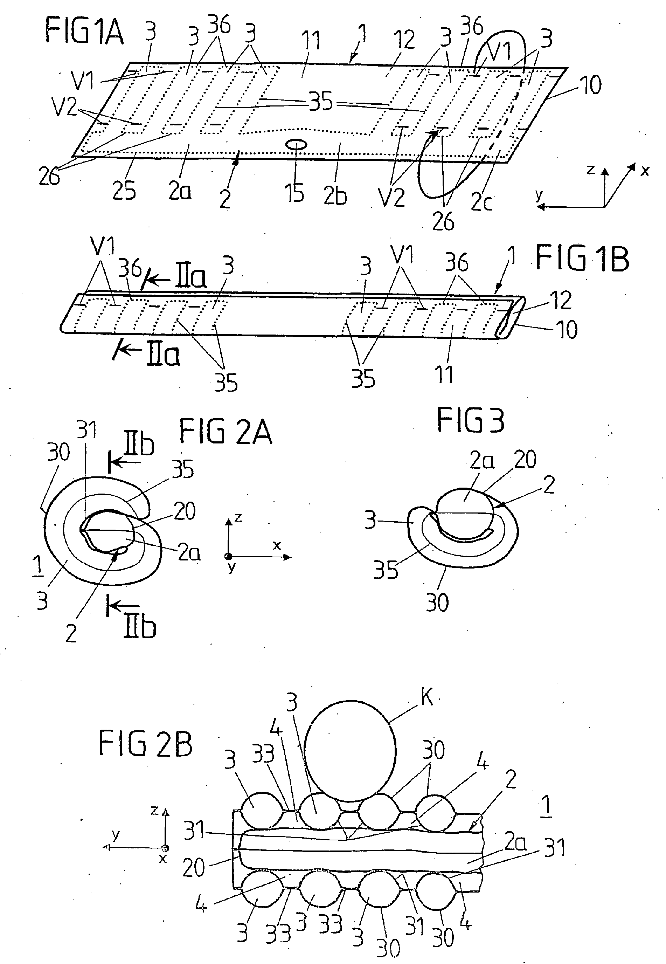

Figur 1a zeigt eine Gassackanordnung 1 für ein Kraftfahrzeug im flach ausgebreiteten Zustand. Die Gassackanordnung 1 wird begrenzt durch einen umlaufenden äußeren Rand 10, innerhalb dem zwei Gassackteile 11, 12, nämlich eine obere, in Figur 1a sichtbare Gassacklage 11 (Gewebelage) und eine untere, in Figur 1a verdeckte Gassacklage 12 (Gewebelage) miteinander verbunden sind.

Bei den beiden Gassackteilen 11, 12 kann es sich einerseits um zwei separate Gassackteile, insbesondere in Form zweier separater Gewebelagen, handeln, die deckungsgleich übereinander gelegt sind und die entlang definierter, vorgebbarer Verbindungslinien 25, 26; 35, 36 durch geeignete Verbindungsmittel miteinander verbunden sind, zum Beispiel durch eine Naht, durch Klebemittel oder durch Verweben. Andererseits können die beiden Gassackteile 11, 12 auch Bestandteile eines einzelnen (spiegelsymmetrisch ausgebildeten) Gassackzuschnittes, der derart um die Spiegelachse als Klappachse umgelegt worden ist, dass die beiden Gassackteile 11, 12 in der dargestellten Weise aufeinander liegen.

Erste Linienzüge 25, 26 der Verbindungslinien 25, 26, 35, 36 bilden eine erste, entlang einer Erstreckungsrichtung y längserstreckte Kammer 2 der Gassackanordnung 1, die im Wesentlichen entlang eines geradlinigen Randabschnittes des umlaufenden äußeren Randes 10 der Gassackanordnung 1 längserstreckt ist. Dieser längserstreckten Kammer 2 ist in dem einen, oberen Gassackteil 11 eine Einblasöffnung 15 zum Einleiten aus einem Gasgenerator austretender Gase zugeordnet. Alternativ kann an Stelle einer Einblasöffnung 15 für durch einen Gasgenerator freigesetzte Gase eine Einführöffnung vorgesehen sein, durch die hindurch ein Gasgenerator in das Innere der längserstreckten Kammer 2 der Gassackanordnung 1 einführbar ist. Die Gassackanordnung 1 und der im Inneren der längserstreckten Kammer 2 der Gassackanordnung 1 angeordnete Gasgenerator werden dann bevorzugt gemeinsam an geeigneter Stelle an einem Kraftfahrzeug fixiert.

Die längserstreckte Kammer 2 lässt sich in drei Kammerbereiche 2a, 2b, 2c unterteilen, von denen - in Erstreckungsrichtung der längserstreckten Kammer 2 betrachtet - der eine Kammerbereich 2b als mittlerer Kammerbereich zwischen zwei einander abgewandten, äußeren (endseitigen) Kammerbereichen 2a, 2c liegt.. Dem mittleren Kammerbereich 2b ist dabei die Einblasöffnung 15 bzw. Einführöffnung für einen Gasgenerator zugeordnet.

Von den beiden daran in Längsrichtung jeweils anschließenden endseitigen Kammerbereichen 2a, 2c steht jeweils eine Mehrzahl weiterer, durch zweite Linienzüge 35, 36 der Verbindungslinien 25, 26, 35, 36 zwischen den beiden Gassackteilen 11, 12 definierter Kammern 3 der Gassackanordnung 1 ab, wobei die weiteren Kammern 3 als Querkammern jeweils im Wesentlichen quer bzw. senkrecht zu der längserstreckten Kammer orientiert und erstreckt sind. Dabei sind benachbarte Kammern der weiteren Kammern 3 jeweils entlang der Erstreckungsrichtung y der längserstreckten Kammer 2 voneinander beabstandet; und die weiteren Kammern 3 erstrecken sich jeweils im Wesentlichen von der längserstreckten Kammer 2 bis zu dem der längserstreckten Kammer 2 gegenüber liegenden Randabschnitt des umlaufenden äußeren Randes 10 der Gassackanordnung 1.

Die weiteren Kammern 3 (Querkammern) weisen keine eigenen Einströmöffnungen für das unmittelbare Einströmen von Gas aus einem Gasgenerator auf. Vielmehr stehen die weiteren Kammern 3 als Querkammern jeweils in Strömungsverbindung mit der längserstreckten Kammer 2 (Längskammer), so dass die weiteren Querkammern 3 dadurch mit Gas befüllt werden können, dass zunächst durch die Einblasöffnung 15 in die Längskammer 2 strömende Gase dann weiter in die Querkammern 3 geleitet werden.

Zum Einbau in oder an ein Kraftfahrzeug wird die Gassackanordnung 1 umgeschlagen, wie anhand des Überganges von Figur 1a zu Figur 1b dargestellt, so dass gemäß Figur 1b insgesamt drei übereinander liegende Faltenlagen der Gassackanordnung 1 gebildet werden. Dies erfolgt dadurch, dass die weiteren Kammern 3 (Querkammern) um die längserstreckte Kammer 2 (Längskammer) herumgelegt werden, wie durch die Pfeile in Figur 1a angedeutet und anhand des fertig zusammengelegten Gassackes gemäß Figur 1b erkennbar. Vorliegend ist dabei die Länge der weiteren Kammern 3 bzw. Querkammern entlang der Richtung x quer zur Erstreckungsrichtung y der Längskammer 2 so gewählt, dass die Querkammern 3 die Längskammer 2 quer zu ihrer Erstreckungsrichtung y vollständig umschließen.

Nach dem Umschlagen der Gassackanordnung 1 gemäß dem Übergang von Figur 1a zu Figur 1b zur Bildung dreier Faltenlagen der Gassackanordnung 1, derart, dass die weiteren Kammern bzw. Querkammern 3 die Längskammer 2 quer zu ihrer Erstreckungsrichtung y umschließen, werden die Faltenlagen der gemäß Figur 1b umgeschlagenen Gassackanordnung 1 miteinander verbunden, zum Beispiel durch Nähen. Die hierfür vorgesehenen Verbindungsstellen V1, V2 liegen vorliegend jeweils in einem nicht aufblasbaren Bereich der Gassackanordnung 1 zwischen zwei entlang der Erstreckungsrichtung y voneinander beabstandeten Querkammern 3. Die zwischen jeweils zwei benachbarten Querkammern liegenden Verbindungsstellen V1, V2 sind dabei jeweils derart entlang der Erstreckungsrichtung x der Querkammern 3 voneinander beabstandet, dass im verbundenen Zustand der drei Faltenlagen der Gassackanordnung, gemäß Figur 1b, die Querkammern 3 die Längskammer 2 jeweils vollständig umgeben.

In den Figuren 2a und 2b ist die in Figur 1b gezeigte Gassackanordnung in einem Querschnitt durch eine der Querkammern 3 sowie in einem Längsschnitt durch die Längskammer 2 im aufgeblasenen Zustand der Gassackanordnung 1 dargestellt. Anhand der Figuren 2a und 2b wird deutlich, dass im aufgeblasenen Zustand der Gassackanordnung 1 die Längskammer 2 eine durch eine innere Hülle 20 begrenzte innere Kammer bildet, wobei die innere Hülle 20 durch die beiden entlang der ersten Linienzüge 25, 26 der Verbindungslinien 25, 26, 35, 36 definiert miteinander verbundenen Gassackteile 11, 12 der Gassackanordnung 1 gebildet wird.

Weiter wird anhand der Figuren 2a und 2b deutlich, dass im aufgeblasenen Zustand der Gassackanordnung 1 die weiteren Kammern bzw. Querkammern 3 jeweils von einer äußeren Hülle 30 umgebene äußere Kammern bilden, die die innere Kammer 2 umschließen und die entlang der Erstreckungsrichtung y der inneren Kammer bzw. Längskammer 2 voneinander beabstandet sind. Die durch die Querkammern gebildeten äußeren Kammern 3 der Gassackanordnung 1 sind jeweils durch Verbindungsbereiche 33 voneinander beabstandet und miteinander verbunden, die ebenso wie die äußeren Hüllen 30 der äußeren Kammern 3 durch die beiden Gassackteile 11, 12 gebildet werden, die jedoch nicht aufblasbar sind. In diesen Verbindungsbereichen 33 liegen die Verbindungsstellen V1, V2, an denen die durch Umschlagen der flach ausgebreiteten Gassackanordnung (vergleiche Figur 1 a) gebildeten Faltenlagen (vergleiche Figur 1 b) der Gassackanordnung 1 miteinander verbunden sind.

Die die äußeren Kammern 3 umschließenden äußeren Hüllen 30 der Gassackanordnung 1 liegen jeweils mit einem Hüllenabschnitt 31 der inneren Kammer 2 bzw. deren Hülle 20 gegenüber. Die besagten Hüllenabschnitte 31 sind derart gekrümmt bzw. in Richtung auf die innere Hülle 20 der inneren Kammer 2 gewölbt, dass im aufgeblasenen Zustand der Gassackanordnung, wie in Figur 2b dargestellt, die der inneren Kammer 2 gegenüber liegenden Hüllenabschnitte 31 der äußeren Kammern 3 jeweils mit einem Teilbereich an der inneren Hülle 20 der inneren Kammer 2 anliegen und im Übrigen von dieser beabstandet sind.

Hierdurch ist zwischen benachbarten äußeren Kammern 3 bzw. zwischen deren äußeren Hüllen 30 jeweils ein nicht aufblasbarer Gassackbereich in Form eines Frei- bzw. Hohlraumes 4 gebildet, der begrenzt ist durch jeweils einen Verbindungsbereich 33 benachbarter äußerer Kammern 3 sowie durch den dem jeweiligen Verbindungsbereich 33 gegenüber liegenden und von diesem beabstandeten Teilbereich der inneren Hülle 20 und weiterhin durch Teile der der inneren Kammer 2 zugewandten Hüllenabschnitte 31 zweier benachbarter äußerer Kammern 3, die durch den besagten Verbindungsbereich 33 miteinander verbunden sind.

Diese nicht mit Gas befüllbaren Frei- bzw. Hohlräume 4 der Gassackanordnung 1 nehmen in der Summe ein erhebliches Volumen ein, das zum Schutz einer Person in einem Crash-Fall nicht mit Gas befüllt werden muss, ohne die Schutzfunktion der Gassackanordnung 1 zu beeinträchtigen. Dies wird dadurch erreicht, dass die nicht mit Gas befüllbaren Freiräume 4 der Gassackanordnung vollständig innerhalb der Gassackanordnung 1 angeordnet sind und nach außen durch die äußeren Kammern 3 sowie deren Verbindungsbereiche 33 begrenzt sind. Die Gassackanordnung 1 wird bevorzugt so ausgelegt, dass sich im aufgeblasenen Zustand einerseits die äußeren Kammern 3 an der inneren Kammer 2 abstützen können und dass andererseits die Verbindungsbereiche 33 zwischen benachbarten äußeren Kammern 3 beim Aufblasen der Gassackanordnung gestrafft werden. Hierbei ist es nicht zwingend erforderlich, dass die äußeren Kammern 3 mit Teilbereichen ihrer der inneren Kammer 2 zugewandten Hüllenabschnitte 31 schon im belastungsfreien aufgeblasenen Zustand an der die innere Kammer 2 umschließenden inneren Hülle 20 anliegen. Vielmehr kann auch ein gewisser Abstand zwischen den der inneren Kammer 2 zugewandten Hüllenabschnitten 31 der äußeren Kammern 3 sowie der die innere Kammer 2 umschließenden inneren Hülle 20 vorgesehen sein, der erst dann überwunden wird, wenn durch Aufprall einer Person auf die Gassackanordnung 1 die äußeren Kammern 3 unter der Wirkung des Aufpralls in Richtung auf die innere Kammer 2 mit Aufprallkraft beaufschlagt werden.

Durch die Straffung der Verbindungsbereiche 33 zwischen den Hüllen 30 der äußeren Kammern 3 sowie durch die Möglichkeit, dass sich die äußeren Kammern 3 über ihre äußeren Hüllen 30 an der die innere Kammer 2 umschließenden inneren Hülle 20 abstützen können, kann mit der beschriebenen Gassackanordnung der Aufprall eines Körperteiles, wie zum Beispiel des in Figur 2b schematisch gezeigten Kopfe K einer Person, aufgefangen werden, ohne dass die Schutzwirkung beeinträchtigt ist. Die vom aufprallenden Körperteil bzw. Kopf K erzeugten Aufprallkräfte wirken zunächst auf die äußeren Kammern 3 der Gassackanordnung 1, welche aufgrund der Straffung der sie verbindenden Verbindungsbereiche 33 sowie aufgrund der Möglichkeit, sich an der inneren Kammer 2 abzustützen, hierbei nachgiebig in einer Position verbleiben, die eine Schutzwirkung für den aufprallenden Kopf K bildet. Die in die vom Aufprall betroffenen äußeren Kammern 3 eingeleiteten Aufprallkräfte werden über die Verbindungsbereiche 33 auch in die umgebenden äußeren Kammern 3 eingeleitet und zudem durch das Abstützen der äußeren Kammern 3 an der inneren Kammer 2 auch in die innere Kammer 2. Somit tragen nicht nur die vom jeweiligen Aufprall betroffenen äußeren Kammern 3 sondern auch die übrigen äußeren Kammern 3 sowie die innere Kammer 2 zur Dämpfung des Aufpralls nach Art eines Gaskissens bei.

Figur 3 zeigt eine Abwandlung der Gassackanordnung aus den Figuren 1a bis 2b im aufgeblasenen Zustand in einem Querschnitt. Der Unterschied zu der zuvor beschriebenen Gässackanordnung besteht dabei darin, dass die äußeren Kammern 3 die innere Kammer 2 nicht vollständig, also unter einem Winkel von 360°, wie im Fall der Figuren 1a bis 2b, umgreifen, sondern vielmehr nur halb, das heißt unter einem Winkel von etwa 180°. Dies kann ausgehend von einer flach ausgebreiteten Gassackanordnung 1 der in Figur 1a dargestellten Art dadurch erreicht werden, dass die Gassackanordnung 1 derart umgeschlagen wird, dass sie nur in zwei Faltenlagen, nicht aber in drei Faltenlagen gelegt wird, so dass sich die äußeren Kammern 3 zwar entlang eines Teiles der inneren Hülle 20 der inneren Kammer 2 erstrecken, diese aber nicht vollständig (unter einem Winkel von 360°) umgreifen.

Eine längserstreckte Gassackanordnung der anhand der Figuren 1a bis 2b bzw. anhand Figur 3 dargestellten Art eignet sich beispielsweise zur Anordnung am unteren Rand einer Windschutzscheibe eines Kraftfahrzeugs, also am Übergang der Windschutzscheibe zur Motorhaube bzw. Motorklappe. Sie kann dabei gleichzeitig zum Anheben des windschutzscheibenseitigen Endes der Motorhaube bzw. Motorklappe in einem Crash-Fall dienen. Hierdurch sollen Kopfverletzungen von Fußgängern oder. Zweiradfahrern verhindert werden, die in einem Crash-Fall mit ihrem Kopf am hinteren Ende der Motorhaube, also am der Windschutzscheibe eines Kraftfahrzeugs zugewandten Endabschnitt der Motorhaube aufschlügen, oder auch auf dem unteren Bereich der Windschutzscheibe. Stattdessen treffen die entsprechenden Personen auf die in diesem Bereich angeordnete und aufgeblasene Gassackanordnung 1 auf, so dass die mögliche Verletzungswirkung eines Kopfaufpralls erheblich reduziert wird.

Entscheidend ist, dass durch die beschriebene Ausbildung der Gassackanordnung 1, wegen der nicht mit Gas befüllbaren Frei- bzw. Hohlräume 4, ein deutlich reduziertes Gasvolumen zum Befüllen der Gassackanordnung 1 genügt und dass gleichzeitig Aufprallenergie gezielt abgebaut werden kann, ohne dass - verglichen mit einer vollständig mit Gas befüllbaren Gassackanordnung - eine erhöhte Verletzungsgefahr bestünde. Dies ist darauf zurückzuführen, dass die äußeren Kammern 3 den. Gassackanordnung 1, die beim Aufprall mit den zu schützenden Körperteilen in Kontakt geraten, einerseits durch die gestrafften bzw. gespannten Verbindungsbereiche 33 untereinander gekoppelt sind und andererseits über ihre der inneren Kammer 2 gegenüber liegenden und sich an deren Hülle 20 abstützenden Hüllenabschnitten 31 auch mit der inneren Kammer 2 definiert gekoppelt sind.

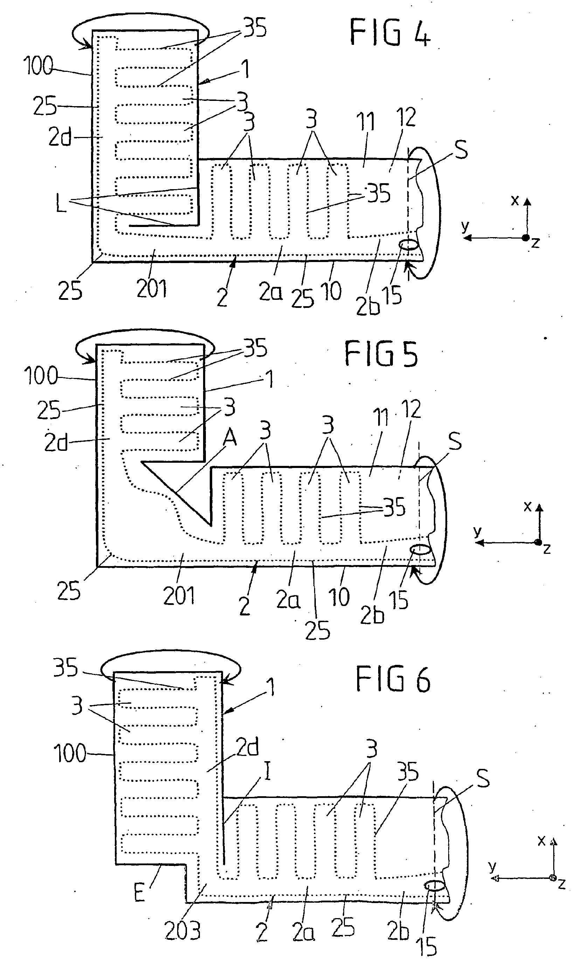

Figur 4 zeigt eine Weiterbildung der Gassackanordnung aus den Figuren 1a bis 2b, und zwar in einem flach ausgebreiteten Zustand, wie er auch der Figur 1a zugrunde liegt. Dabei ist in Figur 4 nur ein Teil der entsprechenden Gassackanordnung 1 dargestellt; die vollständige Gassackanordnung 1 ergibt sich durch eine Spiegelung des in Figur 4 gezeigten Teiles entlang einer durch die Einbiasöffnung 15 verlaufenden Achse S, die sich entlang einer Richtung senkrecht zur dortigen Längskammer 2 und parallel zu den dortigen Querkammern 3 erstreckt. Mit anderen Worten ausgedrückt, zeigt Figur 4 nur eine Hälfte, in der konkreten Figur die linke Hälfte, der Gassackanordnung 1, die insgesamt spiegelbildlich ausgebildet ist, wie dies auch bei der Gassackanordnung gemäß Figur 1a bezüglich einer durch die Einblasöffnung 15 parallel zu den Querkammern 3 verlaufenden Spiegelachse der Fall ist.

Der wesentliche Unterschied zwischen der in Figur 4 im flach ausgebreiteten Zustand gezeigten Gassackanordnung 1 und der in Figur 1a ebenfalls im flach ausgebreiteten Zustand gezeigten Gassackanordnung besteht darin, dass gemäß Figur 4 die Gassackanordnung 1 einen abgewinkelten Endabschnitt 100 aufweist. In diesem verläuft die Längskammer 2 mit einem Endbereich 2d im Wesentlichen senkrecht zu den entlang einer Richtung y längserstreckten Kammerbereichen 2a, 2b, 2c (vergleiche auch Figur 1a) der Längskammer 2. Zwischen diesem abgewinkelten Endbereich 2d der Längskammer 2 und dem daran anschließenden, senkrecht hierzu erstreckten Kammerbereich 2a der Längskammer 2 befindet sich ein Übergangsbereich 201.

Von dem abgewinkelten Endbereich 2d der Längskammer 2, der im Wesentlichen senkrecht zu den weiteren, entlang einer Erstreckungsrichtung y erstreckten Kammerbereichen 2a, 2b, 2c der Längskammer 2 verläuft, stehen wiederum Querkammern 3 ab, die senkrecht zu den Querkammern 3 orientiert sind, die von den übrigen, entlang einer Richtung y erstreckten Kammerbereichen 2a, 2c der Längskammer 2 abstehen.

Ein entsprechender abgewinkelter Endabschnitt 100 der Gassackanordnung 1 befindet sich am gegenüber liegenden, in Figur 4 nicht mit dargestellten Ende den Gassackanordnung 1, und ergibt sich durch Spiegelung des in Figur 4 gezeigten Teiles der Gassackanordnung 1 an der oben definierten, durch die Einblasöffnung 15 verlaufenden Spiegelachse S.

Auch die in Figur 4 gezeigte Gassackanordnung 1 kann gebildet werden durch zwei miteinander vernähte Gassackteile 11, 12, zum Beispiel in Form von Gewebelagen, erfordert dann aber im Übergangsbereich zum abgewinkelten Endabschnitt 100 beispielsweise einen L-förmigen Einschnitt L, damit die Gassackanordnung 1 ausgehend von dem flach ausgebreiteten Zustand, wie in Figur 4 dargestellt, derart umgeschlagen werden kann, wie weiter oben anhand Figur 1b beschrieben, um drei übereinander liegende Faltenlagen zu bilden, so dass im aufgeblasenen Zustand der Gassackanordnung 1 die durch die Querkammern gebildeten äußeren Kammern 3 die durch die abgewinkelte längserstreckte Kammer 2 gebildete innere Kammer umschließen. Im Querschnitt entspricht die ausgehend von der Anordnung gemäß Figur 4 gebildete Gassackanordnung im aufgeblasenen Zustand-also der Darstellung der Figur 2a.

Eine Gassackanordnung 1 der in Figur 4 dargestellten Art eignet sich beispielsweise dazu, am Außenbereich eines Kraftfahrzeugs nicht nur den Übergangsbereich zwischen Motorhaube und Windschutzscheibe abzudecken, sondern gleichzeitig beispielsweise auch die hiervon beidseitig vor der jeweiligen Seitentür verlaufenden A-Säulen eines Kraftfahrzeugs, die von den beiden abgewinkelten Endabschnitten 100 der entsprechenden Gassackanordnung 1 überdeckt würden.

Figur 5 zeigt eine Abwandlung der Anordnung aus Figur 4, wobei der wesentliche Unterschied darin besteht, dass die Gassackanordnung 1 im Übergangsbereich zu dem abgewinkelten Endabschnitt 100 anstelle eines L-förmigen Einschnittes einen Ausschnitt A aufweist. Ferner ist die längserstreckte Kammer 2 (innere Kammer) in ihrem entsprechenden Übergangsbereich 202 verbreitert ausgebildet.

Den Ausführungsbeispielen gemäß Figur 4 und 5 ist gemeinsam, dass im abgewinkelten Endabschnitt 100 der Gassackanordnung 1 die Querkammern 3 im flach ausgebreiteten Zustand der Gassackanordnung 1 jeweils von der längserstreckten Kammer bzw. inneren Kammer 2 abgehend in Richtung auf den gegenüber liegenden (in den Figuren 4. und 5 nicht mit dargestellten) abgewinkelten Endabschnitt am anderen Ende der Gassackanordnung orientiert sind. Im Unterschied hierzu sind bei dem in Figur 6 gezeigten Ausführungsbeispiel einer Gassackanordnung die zur Bildung der äußeren Kammern vorgesehenen Querkammern 3 in entgegengesetzter Richtung orientiert, also weg von dem anderen Endabschnitt der Gassackanordnung 1. Im jeweiligen abgewinkelten Abschnitt 100 der Gassackanordnung 1 ist diese daher derart umzuschlagen, dass wiederum die die äußeren Kammern definierenden Querkammern 3 um die die innere Kammer definierende längserstreckte Kammer 2 bzw. deren abgewinkelten Endbereich 2d herumgelegt werden - also in entgegengesetzter Richtung verglichen mit den Figuren 4 und 5.

Im Übergangsbereich zum jeweiligen abgewinkelten Endabschnitt 100 der Gassackanordnung 1 ist hier jeweils ein geradlinig erstreckter I-förmiger Einschnitt sowie ein äußerer Eckausschnitt E vorgesehen. Die längserstreckte Kammer 2 weist im Übergangsbereich 203 zu ihrem abgewinkelten Endabschnitt 2d eine entsprechend angepasste Kontur auf.

Bei allen vorbeschriebenen Ausführungsbeispielen gilt, dass der Querschnitt und die Gestaltung der die - im aufgeblasenen Zustand der Gassackanordnung 1 - innere Kammer definierenden, gegebenenfalls abgewinkelten längserstreckten Kammer 2 sowie der die äußeren Kammern definierenden Querkammern 3 ebenso wie die Länge jener Querkammern 3 variiert und an den konkreten Einsatzzweck der Gassackanordnung 1 im jeweiligen Einzelfall angepasst werden kann. Dies gilt auch für andere Parameter der Gassackanordnung, wie zum Beispiel den Abstand zwischen benachbarten äußeren Kammern 3 und damit die Breite der dazwischen liegenden, gestrafften Verbindungsbereiche 33, vergleiche Figur 2b.

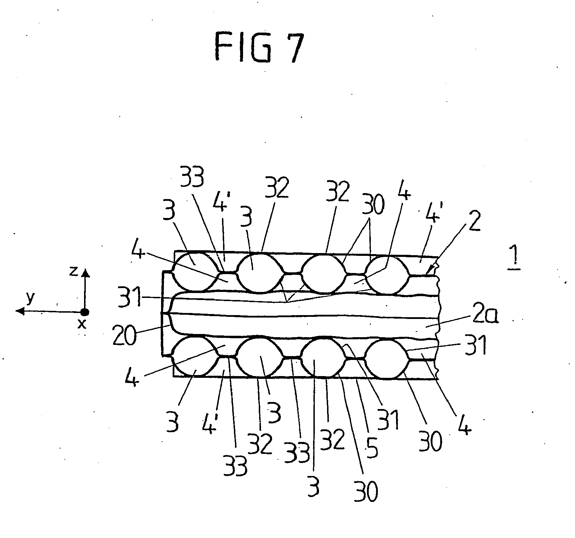

Figur 7 zeigt eine Weiterbildung der Gassackanordnungen aus den Figuren 1a bis 6 in einem Längsschnitt der in Figur 2b gezeigten Art. Im Unterschied zu den anhand der Figuren 1a bis 6 gezeigten Ausführungsbeispielen weist die in Figur 7 dargestellte Gassackanordnung 1 eine aus einem geeigneten flexiblen Material, zum Beispiel aus einem Gewebe, bestehende äußere Umhüllung 5 auf, die sowohl die innere Kammer 2 als auch die äußeren Kammern 3 der Gassackanordnung 1 umhüllt und die an nach außen - von der inneren Kammer 2 weg - weisenden, gewölbten Hüllenabschnitten 32 der die äußeren Kammern 3 bildenden. äußeren Hüllen 30 anliegt und in geeigneter Weise, zum Beispiel durch Kleben oder Nähen, an diesen befestigt ist. Zwischen jener flexibeln äußeren Umhüllung 5 einerseits und den die äußeren Kammern 3 bildenden äußeren Hüllen 30 sowie deren Verbindungsbereichen 33 andererseits sind weitere, nicht mit Gas befüllbare Freiräume 4' der Gassackanordnung ausgebildet.

Die die innere Kammer 2 sowie die äußeren Kammern 3 der Gassackanordnung 1 umhüllende flexible äußere Umhüllung 5 bietet den Vorteil, dass sie die Eindringtiefe eines zu schützenden Körperteiles, insbesondere eines Kopfes K, vergleiche Figur 2b, bis zum Beginn des Energieabbau reduziert, da die auf der Außenseite der Gassackanordnung 1 vorhandenen Lücken (Freiräume 4') zwischen den äußeren Kammern 3 durch die Umhüllung 5 überdeckt werden. Unter Einbeziehung der flexiblen Umhüllung 5 bildet somit die eine innere Kammer 2 sowie eine Mehrzahl äußerer Kammern 3 umfassende Gassackanordnung 1 eine Oberfläche aus, die der Oberfläche eines üblichen, nicht strukturierten Gassackes für ein Airbagmodul entspricht.

## Patentansprüche

1. Gassackanordnung für ein Airbagmodul eines Kraftfahrzeugs, die in einem Crash-Fall zum Schutz einer Person durch Befüllen mit Gas aufblasbar ist, mit
- einer von einer inneren Hülle (20) umschlossenen inneren Kammer (2), die im aufgeblasenen Zustand einen inneren Bereich der Gassackanordnung bildet, und
- einer Mehrzahl äußerer Kammern (3), die im aufgeblasenen Zustand außerhalb der von der inneren Hülle (20) umschlossenen inneren Kammer (2) angeordnet sind, so dass sie die innere Kammer (2) zumindest teilweise umgeben,
wobei die äußeren Kammern (3) mit der inneren Kammer (2) in Strömungsverbindung stehen und zumindest ein Teil der äußeren Kammern (3) jeweils von einer äußeren Hülle (30) umschlossen ist, die einen der inneren Hülle (20) gegenüber liegenden Hüllenabschnitt (31) aufweist, der nicht zur Begrenzung der inneren Kammer (2) dient, und wobei die der inneren Hülle (20) gegenüber liegenden Hüllenabschnitte (31) im aufgeblasenen Zustand zumindest teilweise derart von der inneren Hülle (20) beabstandet sind, dass zwischen der inneren Hülle (20) und den gegenüber liegenden Hüllenabschnitten (31) mindestens ein beim Aufblasen der Gassackanordnung nicht mit Gas befüllter Freiraum (4) gebildet wird, wobei die äußeren Hüllen (30) jeweils um die innere Hülle (20) herumgelegt sind, und **dadurch gekennzeichnet, dass** die äußeren Kammern (3) jeweils im Wesentlichen quer zu einer Erstreckungsrichtung (x, y) der inneren Kammer (2) von der inneren Kammer (2) abgehen.

2. Gassackanordnung nach Anspruch 1, **dadurch gekennzeichnet, dass** zwischen der inneren Hülle (20) und den gegenüber liegenden Hüllenabschnitten (31) eine Mehrzahl nicht mit Gas befüllbarer Freiräume (4) gebildet ist.

3. Gassackanordnung nach Anspruch 2, **dadurch gekennzeichnet, dass** die Freiräume (4) durch die Hüllenabschnitte (31) voneinander getrennt sind.

4. Gassackanordnung nach einem der vorhergehenden Ansprüche, **dadurch gekennzeichnet, dass** die Hüllenabschnitte (31) der äußeren Hülle (30) in Richtung auf die innere Hülle (20) gewölbt sind.

5. Gassackanordnung nach einem der vorhergehenden Ansprüche, **dadurch gekennzeichnet, dass** sich die äußeren Hüllen (30) mit ihren der inneren Hülle (20) gegenüber liegenden Hüllenabschnitten (31) an der inneren Hülle (20) abstützen.

6. Gassackanordnung nach Anspruch 4 und 5, **dadurch gekennzeichnet, dass** sich die Hüllenabschnitte (31) mit jeweils einem in Richtung auf die innere Hülle (20) gewölbten Teilbereich an der inneren Hülle (20) abstützen.

7. Gassackanordnung nach einem der vorhergehenden Ansprüche, **dadurch gekennzeichnet, dass** der mindestens eine nicht mit Gas befüllbare Freiraum (4) zumindest teilweise durch die innere Hülle (20) und durch mindestens eine äußere Hülle (30) begrenzt ist.

8. Gassackanordnung nach Anspruch 7, **dadurch gekennzeichnet, dass** der Freiraum (4) zumindest teilweise durch die innere Hülle (20) und die äußeren Hüllen (30) zweier benachbarte äußerer Kammern (3) begrenzt ist.

9. Gassackanordnung nach einem der vorhergehenden Ansprüche, **dadurch gekennzeichnet, dass** zumindest ein Teil der äußeren Hüllen (30) paarweise untereinander verbunden ist.

10. Gassackanordnung nach Anspruch 9, **dadurch gekennzeichnet, dass** die äußeren Hüllen (30) durch jeweils einen nicht gasleitenden Verbindungsbereich (33) miteinander verbunden sind.

11. Gassackanordnung nach Anspruch 10, **dadurch gekennzeichnet, dass** der jeweilige Verbindungsbereich (33) einen Bestandteil mindestens eines Gassackteiles (11, 12) bildet, das zur Bildung der äußeren Hüllen (30) dient.

12. Gassackanordnung nach Anspruch 10 oder 11, **dadurch gekennzeichnet, dass** der jeweilige Verbindungsbereich (33) beim Aufblasen der Gassackanordnung (1) gestrafft wird.

13. Gassackanordnung nach einem der Ansprüche 10 bis 12, **dadurch gekennzeichnet, dass** die Verbindungsbereiche (33) jeweils eine der inneren Hülle (20) gegenüber liegende Oberfläche aufweisen, die von der inneren Hülle (20) beabstandet ist.

14. Gassackanordnung nach Anspruch 8 und einem der Ansprüche 10 bis 13, **dadurch gekennzeichnet, dass** ein jeweiliger Freiraum (4) zumindest teilweise durch die innere Hülle (20), die äußeren Hüllen (30) zweier benachbarter äußerer Kammern (3) und einen Verbindungsbereich (33) der beiden äußeren Kammern (3) begrenzt wird.

15. Gassackanordnung nach einem der vorhergehenden Ansprüche, **dadurch gekennzeichnet, dass** die um die innere Hülle (20) herumgelegten äußeren Hüllen (30) jeweils einen Winkel von mindestens 120° einschließen.

16. Gassackanordnung nach Anspruch 15, **dadurch gekennzeichnet, dass** die um die innere Hülle (20) herumgelegten äußeren Hüllen (30) jeweils einen Winkel von mindestens 180° einschließen.

17. Gassackanordnung nach Anspruch 16, **dadurch gekennzeichnet, dass** die um die innere Hülle (20) herumgelegten äußeren Hüllen (30) jeweils einen Winkel von mindestens 360° einschließen.

18. Gassackanordnung nach einem der vorhergehenden Ansprüche, **dadurch gekennzeichnet, dass** die die innere Kammer (2) umgebenden äußeren Kammern (3) voneinander beabstandet sind.

19. Gassackanordnung nach einem der vorhergehenden Ansprüche, **dadurch gekennzeichnet, dass** die äußeren Kammern (3) derart mit der inneren Kammer (2) in Strömungsverbindung stehen, dass durch Befüllen der inneren Kammer (2) mit Gas auch die äußeren Kammern (3) aufblasbar sind.

20. Gassackanordnung nach einem der vorhergehenden Ansprüche, **dadurch gekennzeichnet, dass** die innere Kammer (2) längserstreckt ausgebildet ist.

21. Gassackanordnung nach Anspruch 20, **dadurch gekennzeichnet, dass** die längserstreckte Kammer (2) im Wesentlichen durchgängig geradlinig längserstreckt ist.

22. Gassackanordnung nach Anspruch 21, **dadurch gekennzeichnet, dass** die längserstreckte Kammer (2) mindestens einen abgewinkelten Endbereich (2d) aufweist.

23. Gassackanordnung nach Anspruch 22, **dadurch gekennzeichnet, dass** die Gassackanordnung (1) im Übergangsbereich zu dem abgewinkelten Endbereich (2d) der längserstreckten inneren Kammer (2) mindestens einen Einschnitt (I, L) und/oder Ausschnitt (A, E) aufweist.

24. Gassackanordnung nach einem der vorhergehenden Ansprüche, **dadurch gekennzeichnet, dass** die Gassackanordnung (1) mindestens zwei flächige Gassackteile (11, 12) umfasst, die zur Bildung der inneren Kammer (2) sowie der äußeren Kammern (3) entlang Verbindungslinien (25, 26, 35, 36) miteinander verbunden sind.

25. Gassackanordnung nach Anspruch 24, **dadurch gekennzeichnet, dass** die Gassackteile (11, 12) entlang der Verbindungslinien (25, 26, 35, 36) durchgängig oder punktuell miteinander verbunden sind.

26. Gassackanordnung nach Anspruch 24 oder 25, **dadurch gekennzeichnet, dass** die Gassackteile (11, 12) entlang der Verbindungslinien (25, 26, 35, 36) durch Nähen, Verweben und/oder Verkleben miteinander verbunden sind.

27. Gassackanordnung nach einem der vorhergehenden Ansprüche, **dadurch gekennzeichnet, dass** die Gassackanordnung (1) im nicht aufgeblasenen Zustand derart in mindestens zwei Faltenlagen gelegt ist, dass die äußeren Kammern (3) die innere Kammer (2) zumindest teilweise umgreifen, und dass die Faltenlagen der Gassackanordnung (1) an Verbindungsstellen (V1, V2) derart miteinander verbunden sind, dass die äußeren Kammern (3) die innere Kammer (2) auch im aufgeblasenen Zustand umgreifen.

28. Gassackanordnung nach einem der vorhergehenden Ansprüche, **dadurch gekennzeichnet, dass** die Gassackanordnung (1) eine flexible Umhüllung (5) aufweist, die sowohl die mindestens eine innere Kammer (2) als auch zumindest ein Teil der äußeren Kammern (3) der Gassackanordnung (1) umhüllt.

29. Gassackanordnung nach Anspruch 28, **dadurch gekennzeichnet, dass** von der flexiblen Umhüllung (5) umhüllte Freiräume (4') der Gassackanordnung (1), die keinen Bestandteil der mindestens einen inneren Kammer (2) oder einer der äußeren Kammern (3) bilden, nicht mit Gas befüllbar sind.

30. Gassackanordnung nach Anspruch 28 oder 29, **dadurch gekennzeichnet, dass** die flexible Umhüllung (5) auf der Außenseite der Gassackanordnung (1) liegende Freiräume (4') zwischen , äußeren Kammern (3) der Gassackanordnung (1) überdeckt.

## Claims

1. An airbag arrangement for an airbag module of a motor vehicle, which airbag arrangement can be inflated in the event of a crash by being filled with gas in order to protect a person, with
- an inner chamber (2) which is enclosed by an inner covering (20) and, in the inflated state, forms an inner region of the airbag arrangement, and
- a plurality of outer chambers (3) which, in the inflated state, are arranged outside the inner chamber (2), which is enclosed by the inner covering (20), in such a manner that they at least partially surround the inner chamber (2),
the outer chambers (3) being connected in terms of flow to the inner chamber (2), and at least some of the outer chambers (3) being each enclosed by an outer covering (30) which has a covering section (31) which lies opposite the inner covering (20) and does not serve to delimit the inner chamber (2), and, in the inflated state, the covering sections (31) which lie opposite the inner covering (20) being at least partially spaced apart from the inner covering (20) in such a manner that at least one clearance (4) which is not filled with gas when the airbag arrangement is inflated is formed between the inner covering (20) and the covering sections (31) lying opposite it, the outer coverings (30) each being laid around the inner covering (20), and **characterized in that** the outer chambers (3) each leading off from the inner chamber (2) essentially transversely with respect to a direction of extent (x, y) of the inner chamber (2).

2. The airbag arrangement as claimed in claim 1, **characterized in that** a plurality of clearances (4) which cannot be filled with gas is formed between the inner covering (20) and the covering sections (31) lying opposite it.

3. The airbag arrangement as claimed in claim 2, **characterized in that** the clearances (4) are separated from one another by the covering sections (31).

4. The airbag arrangement as claimed in one of the preceding claims, **characterized in that** the covering sections (31) of the outer covering (30) are arched in the direction of the inner covering (20).

5. The airbag arrangement as claimed in one of the preceding claims, **characterized in that** the outer coverings (30) are supported on the inner covering (20) by means of their covering sections (31) lying opposite the inner covering (20).

6. The airbag arrangement as claimed in claims 4 and 5, **characterized in that** the covering sections (31) are supported on the inner covering (20) by means of a respective subregion arched in the direction of the inner covering (20).

7. The airbag arrangement as claimed in one of the preceding claims, **characterized in that** the at least one clearance (4) which cannot be filled with gas is at least partially delimited by the inner covering (20) and by at least one outer covering (30).

8. The airbag arrangement as claimed in claim 7, **characterized in that** the clearance (4) is at least partially delimited by the inner covering (20) and the outer coverings (30) of two adjacent outer chambers (3) .

9. The airbag arrangement as claimed in one of the preceding claims, **characterized in that** at least some of the outer coverings (30) are connected to one another in pairs.

10. The airbag arrangement as claimed in claim 9, **characterized in that** the outer coverings (30) are connected to one another by a respective connecting region (33) which is not gas-conducting.

11. The airbag arrangement as claimed in claim 10, **characterized in that** the respective connecting region (33) forms a component of at least one airbag part (11, 12) which serves to form the outer coverings (30).

12. The airbag arrangement as claimed in claim 10 or 11, **characterized in that** the respective connecting region (33) is tensioned when the airbag arrangement (1) is inflated.

13. The airbag arrangement as claimed in one of claims 10 to 12, **characterized in that** the connecting regions (33) each have a surface which lies opposite the inner covering (20) and is spaced apart from the inner covering (20).

14. The airbag arrangement as claimed in claim 8 and one of claims 10 to 13, **characterized in that** a respective clearance (4) is at least partially delimited by the inner covering (20), the outer coverings (30) of two adjacent outer chambers (3) and a connecting region (33) of the two outer chambers (3).

15. The airbag arrangement as claimed in one of the preceding claims, **characterized in that** the outer coverings (30) laid around the inner covering (20) each enclose an angle of at least 120°.

16. The airbag arrangement as claimed in claim 15, **characterized in that** the outer coverings (30) laid around the inner covering (20) each enclose an angle of at least 180°.

17. The airbag arrangement as claimed in claim 16, **characterized in that** the outer coverings (30) laid around the inner covering (20) each enclose an angle of at least 360°.

18. The airbag arrangement as claimed in one of the preceding claims, **characterized in that** the outer chambers (3) surrounding the inner chamber (2) are spaced apart from one another.

19. The airbag arrangement as claimed in one of the preceding claims, **characterized in that** the outer chambers (3) are connected in terms of flow to the inner chamber (2) in such a manner that the outer chambers (3) can also be inflated by the inner chamber (2) being filled with gas.

20. The airbag arrangement as claimed in one of the preceding claims, **characterized in that** the inner chamber (2) is designed such that it extends longitudinally.

21. The airbag arrangement as claimed in claim 20, **characterized in that** the longitudinally extending chamber (2) extends longitudinally essentially continuously rectilinearly.

22. The airbag arrangement as claimed in claim 21, **characterized in that** the longitudinally extending chamber (2) has at least one angled end region (2d).

23. The airbag arrangement as claimed in claim 22, **characterized in that** the airbag arrangement (1) has at least one incision (I, L) and/or cutout (A, E) in the transition region to the angled end region (2d) of the longitudinally extending inner chamber (2).

24. The airbag arrangement as claimed in one of the preceding claims, **characterized in that** the airbag arrangement (1) comprises at least two sheetlike airbag parts (11, 12) which are connected to each other along connecting lines (25, 26, 35, 36) to form the inner chamber (1) and the outer chambers (3).

25. The airbag arrangement as claimed in claim 24, **characterized in that** the airbag parts (11, 12) are connected to each other along the connecting lines (25, 26, 35, 36) continuously or in a punctiform manner.

26. The airbag arrangement as claimed in claim 24 or 25, **characterized in that** the airbag parts (11, 12) are connected to each other along the connecting lines (25, 26, 35, 36) by sewing, weaving and/or adhesive bonding.

27. The airbag arrangement as claimed in one of the preceding claims, **characterized in that** the airbag arrangement (1), when not inflated, is placed into at least two folded layers in such a manner that the outer chambers (3) at least partially engage around the inner chamber (2), and **in that** the folded layers of the airbag arrangement (1) are connected to one another at connecting points (V1, V2) in such a manner that the outer chambers (3) engage around the inner chamber (2) even in the inflated state.

28. The airbag arrangement as claimed in one of the preceding claims, **characterized in that** the airbag arrangement (1) has a flexible sheathing (5) which envelops both the at least one inner chamber (2) and at least some of the outer chambers (3) of the airbag arrangement (1).

29. The airbag arrangement as claimed in claim 28, **characterized in that** clearances (4') of the airbag arrangement (1), which clearances are enveloped by the flexible sheathing (5) and do not form a component of the at least one inner chamber (2) or of one of the outer chambers (3) cannot be filled with gas.

30. The airbag arrangement as claimed in claim 28 or 29, **characterized in that** the flexible sheathing (5) covers clearances (4') between outer chambers (3) of the airbag arrangement (1), which clearances lie on the outside of the airbag arrangement (1).

## Revendications

1. Agencement à coussin gonflable pour un module d'airbag d'un véhicule automobile, qui est gonflable par remplissage avec du gaz dans le cas d'une collision pour protéger une personne, comprenant :
- une chambre intérieure (2) enfermée par une enveloppe intérieure (20) et formant une zone intérieure de l'agencement à coussin gonflable dans l'état gonflé, et
- une pluralité de chambres extérieures (3) qui sont agencées à l'état gonflé à l'extérieur de la chambre intérieure (2) enfermée par l'enveloppe intérieure (20), de telle façon qu'elles entourent au moins partiellement la chambre intérieure (2),
dans lequel les chambres extérieures (3) sont en liaison fluidique avec la chambre intérieure (2) et au moins une partie des chambres extérieures (3) est respectivement enfermée par une enveloppe extérieure (30) comprenant un tronçon d'enveloppe (31) situé à l'opposé de l'enveloppe intérieure (20), qui ne sert pas à la délimitation de la chambre intérieure (2), et dans lequel, à l'état gonflé, les tronçons d'enveloppe (31) qui sont situés à l'opposé de l'enveloppe intérieure (20) sont écartés au moins partiellement de l'enveloppe intérieure (20) de telle façon qu'il se forme entre l'enveloppe intérieure (20) et les tronçons d'enveloppe (31) situés à l'opposé au moins un espace libre (4) qui n'est pas rempli avec du gaz lors du gonflage de l'agencement à coussin gonflable, les enveloppes extérieures (30) étant respectivement posées autour l'enveloppe intérieure (20),
**caractérisé en ce que** les chambres extérieures (3) partent respectivement depuis la chambre intérieure (2) sensiblement perpendiculairement à une direction d'extension (x, y) de la chambre intérieure (2).

2. Agencement à coussin gonflable selon la revendication 1, **caractérisé en ce qu'**une pluralité d'espaces libres (4) qui ne sont pas remplis avec du gaz sont formés entre l'enveloppe intérieure (20) et les tronçons d'enveloppe (31) situés à l'opposé.

3. Agencement à coussin gonflable selon la revendication 2, **caractérisé en ce que** les espaces libres (4) sont séparés les uns des autres par les tronçons d'enveloppe (31).

4. Agencement à coussin gonflable selon l'une des revendications précédentes, **caractérisé en ce que** les tronçons d'enveloppe (31) de l'enveloppe extérieure (30) sont bombés en direction de l'enveloppe intérieure (20).

5. Agencement à coussin gonflable selon l'une des revendications précédentes, **caractérisé en ce que** les enveloppes extérieures (30) s'appuient contre l'enveloppe intérieure (20) au moyen de leurs tronçons d'enveloppe (31) situés à l'opposé de l'enveloppe intérieure (20).

6. Agencement à coussin gonflable selon la revendication 4 et 5, **caractérisé en ce que** les tronçons d'enveloppe (31) s'appuient contre l'enveloppe intérieure (20) au moyen d'une zone partielle respective bombée en direction de l'enveloppe intérieure (20).

7. Agencement à coussin gonflable selon l'une des revendications précédentes, **caractérisé en ce que** ledit au moins un espace libre (4) qui n'est pas rempli de gaz est délimité au moins partiellement par l'enveloppe intérieure (20) et par au moins une enveloppe extérieure (30).

8. Agencement à coussin gonflable selon la revendication 7, **caractérisé en ce que** l'espace libre (4) est délimité au moins partiellement par l'enveloppe intérieure (20) et par les enveloppes extérieures (30) de deux chambres extérieures voisines (3).

9. Agencement à coussin gonflable selon l'une des revendications précédentes, **caractérisé en ce qu'**une partie au moins des enveloppes extérieures (30) sont reliés les unes aux autres par paires.

10. Agencement à coussin gonflable selon la revendication 9, **caractérisé en ce que** les enveloppes extérieures (30) sont reliées les unes aux autres par une zone de liaison respective (30) qui ne laisse pas passer le gaz.

11. Agencement à coussin gonflable selon la revendication 10, **caractérisé en ce que** la zone de liaison respective (33) forme un élément constitutif d'au moins une partie de coussin gonflable (11, 12) qui sert à former les enveloppes extérieures (30).

12. Agencement à coussin gonflable selon la revendication 10 ou 11, **caractérisé en ce que** la zone de liaison respective est tendue lors du gonflage de l'agencement à coussin gonflable (1).

13. Agencement à coussin gonflable selon l'une des revendications 10 à 12, **caractérisé en ce que** les zones de liaison (33) présentent chacune une surface, située à l'opposé de l'enveloppe intérieure (20), qui est écartée de l'enveloppe intérieure (20).

14. Agencement à coussin gonflable selon la revendication 8 et selon l'une des revendications 10 à 13, **caractérisé en ce qu'**un espace libre respectif (4) est délimité au moins partiellement par l'enveloppe intérieure (20), par les enveloppes extérieures (30) de deux chambres extérieures voisines (3) et par une zone de liaison (33) des deux chambres extérieures (3).

15. Agencement à coussin gonflable selon l'une des revendications précédentes, **caractérisé en ce que** les enveloppes extérieures (30) posées autour de l'enveloppe intérieure (20) enferment chacune un angle d'au moins 120°.

16. Agencement à coussin gonflable selon la revendication 15, **caractérisé en ce que** les enveloppes extérieures (30) posées autour de l'enveloppe intérieure (20) enferment chacune un angle d'au moins 180°.

17. Agencement à coussin gonflable selon la revendication 16, **caractérisé en ce que** les enveloppes extérieures (30) posées autour de l'enveloppe intérieure (20) enferment chacune un angle d'au moins 360°.

18. Agencement à coussin gonflable selon l'une des revendications précédentes, **caractérisé en ce que** les chambres extérieures (3) qui entourent la chambre intérieure (2) sont écartées les unes des autres.

19. Agencement à coussin gonflable selon l'une des revendications précédentes, **caractérisé en ce que** les chambres extérieures (3) sont en liaison fluidique avec la chambre intérieure (2) de telle façon qu'en remplissant la chambre intérieure (2) avec du gaz, les chambres extérieures (3) sont également gonflables.

20. Agencement à coussin gonflable selon l'une des revendications précédentes, **caractérisé en ce que** la chambre intérieure (2) est réalisée de manière allongée en longueur.

21. Agencement à coussin gonflable selon la revendication 20, **caractérisé en ce que** la chambre (2) allongée en longueur, est allongée en longueur sensiblement de manière rectiligne sur la totalité.

22. Agencement à coussin gonflable selon la revendication 21, **caractérisé en ce que** la chambre (2) allongée en longueur comprend au moins une zone terminale coudée (2d).

23. Agencement à coussin gonflable selon la revendication 22, **caractérisé en ce que** l'agencement à coussin gonflable (1) comprend, dans la zone de transition vers la zone terminale coudée (2d) de la chambre intérieure (2) allongée en longueur, au moins une entaille (I, L) et/ou une découpe (A, E).

24. Agencement à coussin gonflable selon l'une des revendications précédentes, **caractérisé en ce que** l'agencement à coussin gonflable (1) comprend au moins deux parties de coussin (11, 12) surfaciques, qui sont reliées l'une à l'autre le long de lignes de liaison (25, 26, 35, 36) pour former la chambre intérieure (2) ainsi que les chambres extérieures (3).

25. Agencement à coussin gonflable selon la revendication 24, **caractérisé en ce que** les parties de coussin (11, 12) sont reliées les unes aux autres en continu ou ponctuellement le long des lignes de liaison (25, 26, 35, 36).

26. Agencement à coussin gonflable selon la revendication 24 ou 25, **caractérisé en ce que** les parties de coussin (11, 12) sont reliées les unes aux autres le long des lignes de liaison (25, 26, 35, 36) par couture, par tissage et/ou par collage.

27. Agencement à coussin gonflable selon l'une des revendications précédentes, **caractérisé en ce que** l'agencement à coussin gonflable (1) est disposé, dans l'état non gonflé, en au moins deux couches pliées, de telle façon que les chambres extérieures (3) entourent au moins partiellement la chambre intérieure (2), et **en ce que** les couches pliées de l'agencement à coussin gonflable (1) sont reliées l'une à l'autre au niveau d'emplacement de liaison (V1, V2) de telle manière que les chambres extérieures (3) entourent la chambre intérieure (2) également à l'état gonflé.

28. Agencement à coussin gonflable selon l'une des revendications précédentes, **caractérisé en ce que** l'agencement à coussin gonflable (1) comprend un enrobage flexible (5) qui entoure aussi bien ladite au moins une chambre intérieure (2) qu'au moins une partie des chambres extérieures (3) de l'agencement à coussin gonflable (1).

29. Agencement à coussin gonflable selon la revendication 28, **caractérisé en ce que** des espaces libres (4'), entourés par l'enrobage flexible (5), de l'agencement à coussin gonflable (1), qui ne forment pas une partie constitutive de ladite au moins une chambre intérieure (2) ou de l'une des chambres extérieures (3), ne sont pas remplissables avec du gaz.

30. Agencement à coussin gonflable selon la revendication 28 au 29, **caractérisé en ce que** l'enrobage flexible (5) recouvre des espaces libres (4'), situés sur la face extérieure de l'agencement à coussin gonflable (1), entre des chambres extérieures (3) de l'agencement à coussin gonflable (1).
